# EUROPEAN PATENT SPECIFICATION

(11) **EP 1 120 036 B1**
(45) Date of publication and mention of the grant of the patent: **26.07.2006**
(21) Application number: 01201748.9
(22) Date of filing: 20.05.1997
(51) Int. Cl.: A01J 5/017, A01K 1/12, A01K 13/00

(54) **A construction including an accommodation for animals**
Konstruktion mit Unterbringungsbox für Tiere
Structure comprenant une stalle pour un animal

(30) Priority: 23.05.1996 EP 96201447
(43) Date of publication of application: 01.08.2001
(62) Divisional of application: 97923317.8
(73) Proprietor: MAASLAND N.V., 3147 PA Maassluis (NL)
(72) Inventor: Van der Lely, Cornelis, 6300 Zug (CH)
(74) Representative: Corten, Maurice Jean F.M.

(56) References cited:
- EP-A- 0 091 892
- EP-A- 0 630 558
- EP-A- 0 634 097
- EP-A- 0 638 232

## Description

The invention relates to a construction including an accommodation for animals, such as cows, said accommodation comprising at least one milk box, and a massage member and/or a brushing member disposed on the milk box or near thereto in such a maner that it will be possible to massage or brush the rear end of the animal, said massage member and the brushing member comprising a robot arm construction by means of which it will be possible to massage and/or brush an animal automatically from its head to its rear end by means of a massage element and a brush being disposed near the end of the robot arm construction.

Such a construction is known, from WO-96/1997, a document according to Article 54(3) EPC.

It is important, however, that the animals feel at ease in the accommodation, as this may increase the milk production and reduce the percentage of diseases of the animals. Therefore, the invention aims at arranging the accommodation in such a manner that the animals feel at ease there.

In accordance with the invention, this is achieved by the feature of claim 1 that the massage element is connected to the robot arm construction via a hinge so as to be capable of adapting itself to the unevennesses of the body of the animal. Massaging the animal stimulates the milk yield, while the skin of the animal is kept clean by brushing. Since the massage element is connected to the robot arm construction via a hinge it is ensured that the massage element will be capable of adapting itself to the contours of the animal.

In accordance with a further embodiment, the hinge is produced as a ball-and-socket joint comprising stop means with the aid of which the strike which the massage element is allowed to make relative to the robot arm construction is limited.

In order to render the massage as pleasant as possible for the animal, in accordance with a further embodiment, the massage member comprises a massage element which is made of flexible material, such as synthetic material or rubber. In accordance with a further embodiment, it will be possible to stimulate an animal additionally in that the massage and/or the brushing member comprise(s) a device by means of which it will be possible, in a cold season, to supply automatically warm air, water or oil during massaging and/or brushing.

For the purpose of stimulating the animal even more intensively, according to an embodiment, the surface of the massage element is produced as a profiled one. In a preferred embodiment in of the invention, the profiled surface is constituted by ribs and/or knobs.

In accordance with a further embodiment of the invention, the robot arm construction is disposed near the side of the milk box. According to a further embodiment, the robot arm construction is fastened to the frame of the milk box. In order to make it possible to massage and/or brush the animal over its entire length, in accordance with an embodiment, the construction comprises a longitudinal guide means, such as a rail, across which the massage member and/or the brushing member can be moved in the longitudinal direction of the animal. According to a further embodiment of the invention, the massage member is provided with drive means with the aid of which the massage element can be set vibrating. In accordance with an embodiment, there is disposed, near the end of the robot arm construction, a rotatably driven brush. According to again an other inventive feature, the massage element and a brush are capable of being driven at a variable speed. In order to make it possible that the animal is massaged and/or brushed on both sides, according to an embodiment, on both sides of the milk box there are/is arranged a massage member and/or a brushing member.

According to another embodiment of the invention, the rear side of the animal can be massaged by means of an element which is driven in a diabolically rotating manner.

For a better understanding of the invention, reference will now be made to the accompanying drawings, in which:
Figure 1 shows a side view of a box in which there are disposed massage members and brushing members;
Figure 2 shows a rear view of the box according to the line II-II in Figure 1;
Figure 3 shows to an enlarged scale a plan view of a massage element according to the arrow III in Figure 1;
Figure 4 is a cross-section of the massage element according to the line IV-IV in Figure 3, and
Figure 5 shows a rear view of an alternative box in which there is disposed one massage member.

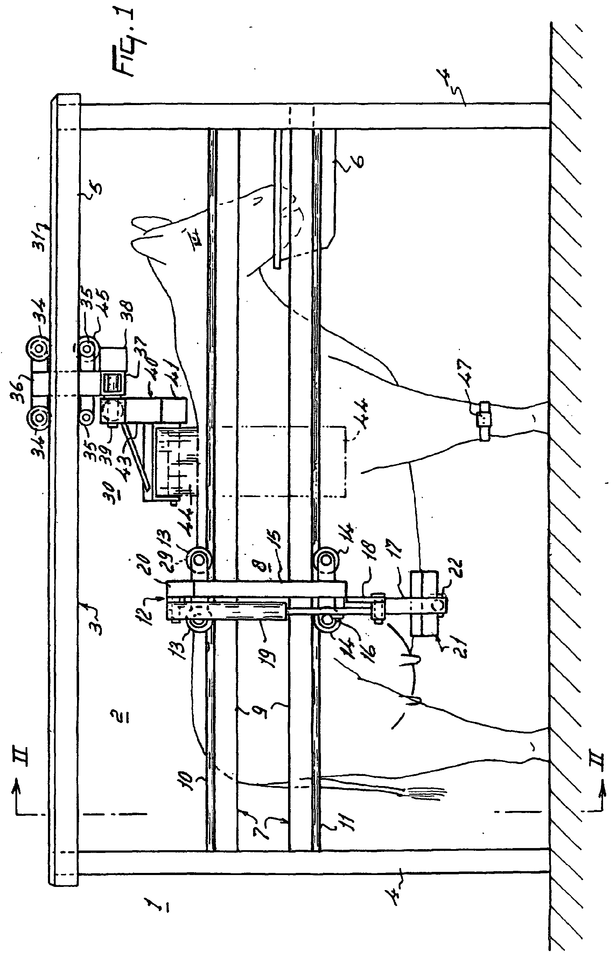

Figure 1 shows a side view of an accommodation 1 for animals in which there is disposed a box 2. The box 2 comprises a frame 3 including stands 4 and joists 5 (Figure 1, 2). On the frame 3 there is further disposed a feed trough 6 in which fodder, such as concentrate, can be dispensed to the animals in the box 1 by means of a (non-shown) concentrate rationing system. The box 2 is further provided with a (non-shown) animal identification system by means of which an animal can be identified. For that purpose the animals are provided with a band 47 disposed around the leg, which band 47 comprises a responder that communicates with the animal identification system.

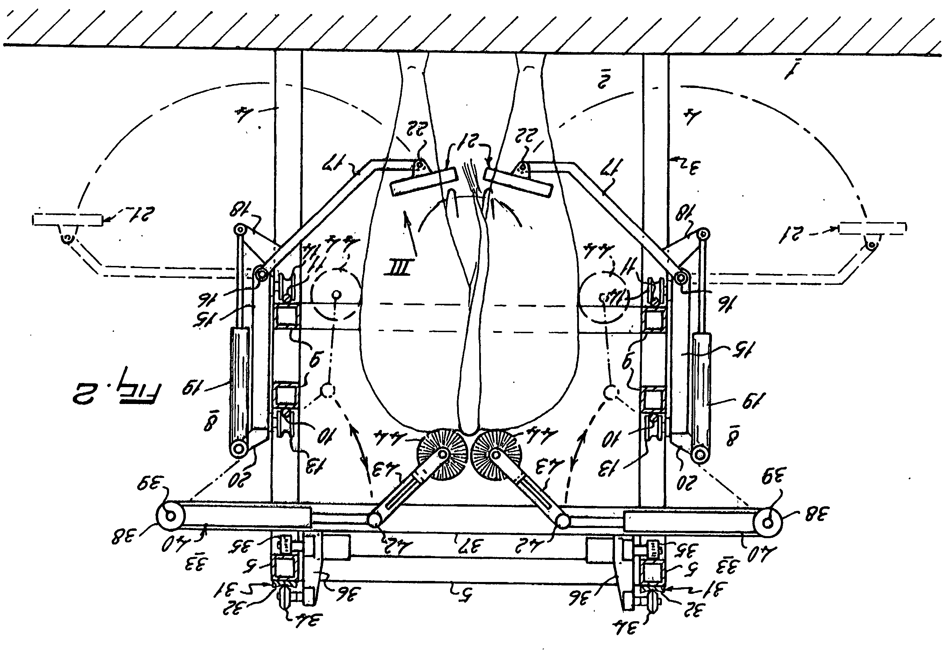

Between the stands 4, on both sides of the box 2 at approximately half the height of the box 2, there is disposed a longitudinal guide means 7 for a massage member 8. The longitudinal guide means 7 comprises two spaced apart box girders 9, of which the upper box girder 9 is provided at its upper side with a profiled edge 10 and the lower box girder 9 is provided at its lower side with a profiled edge 11. On the longitudinal guide means 7 there is disposed a robot arm construction 12 pertaining to the massage member 8. By means of an upper pair of wheels 13 and a lower pair of wheels 14 the robot arm construction 12 is suspended so as to be movable across the profiled edges 10, 11. Between the pairs of wheels 13 and 14 there is disposed a vertical beam 15, provided at its lower side with an arm 17 that is pivotable about a horizontal shaft 16. Near the horizontal shaft 16 the pivotable arm 17 is provided with a lever 18 whose end is rotatably coupled with a vertically arranged cylinder 19 whose other end is also rotatably connected to a lug 20 fastened to the vertical beam 15. Near its end the arm 17 is provided with a massage element 21. In Figures 3 and 4 the massage element 21 is shown to an enlarged scale. The massage element 21 is connected to the arm 17 via a ball-and-socket joint 22. The ball-and-socket joint 22 is provided with (non-shown) blocking means, with the aid of which the strike which the massage element 21 is allowed to make relative to the arm 17 is limited. The massage element 21 comprises a square massage plate 23 made of a flexible material, such as rubber or synthetic material. The massage plate 23 is provided at its upper side with knobs 24. The massage element 21 can be set vibrating by means of a drive 25 disposed under the massage plate 23. The massage member 8 is further provided with a spraying device 26 by means of which warm or cold air, water or oil can be supplied to the massage element 21. The spraying device 26 comprises a spraying nozzle 27 disposed in the centre of the massage plate 23. Via a line 28 disposed in the arm 17 the warm or cold air, water, oil can be supplied to the spraying nozzle 27.

By means of the cylinder 19 the massage element 21 can be pivoted from its position outside the box indicated by broken lines to under the abdomen of an animal. By means of a motor 29 disposed on the upper pair of wheels 13 the massage member 8 can be moved in the longitudinal direction of the box 2 across the longitudinal guide means 7. It will thus be possible to massage the udder of the animal and every place desired therearound by means of the massage element 21.

As shown in Figures 1 and 2, the box 2 is further provided on both sides with a brushing member 30. The brushing member 30 is also movable in the longitudinal direction of the box 2 across a further longitudinal guide means 31 disposed on the frame 3 of the box 2. The further longitudinal guide means 31 comprises a profiled edge 32 disposed on the joists 5. The brushing member 30 comprises a further robot arm construction 33 which can be moved across the further longitudinal guide means 31 in the longitudinal direction of the milk box 2 by means of an upper pair of wheels 34 and a lower pair of wheels 35. Between the upper pair of wheels 34 and the lower pair of wheels 35 there is arranged a vertically extending box girder 36. At the lower end of the box girder 36 there is arranged a box girder 37 which is in a horizontal position and which extends from the box 2 in outward direction. At the end of the horizontal box girder 37 there is arranged a step motor 38 provided with a horizontal shaft 39, which is firmly connected with a telescoping arm 40. At the end of the telescoping arm 40 there is disposed a second step motor 41 which is also provided with a horizontal shaft 42 connected with a further arm 43. At the end of the further arm 43 there is disposed a rotatably driven brush 44. The brush 44 is driven by a (non-shown) motor which is capable of being driven in two directions at a variable number of revolutions. By means of the aforementioned step motor and the telescoping arm 40 the brush 44 can be moved along the trunk of the animal from the position shown in bold lines in Figure 2 until the schematically shown position. By means of a step motor 45 disposed on the lower pair of wheels 25 it is possible to move the brush member 30 in the longitudinal direction of the box.

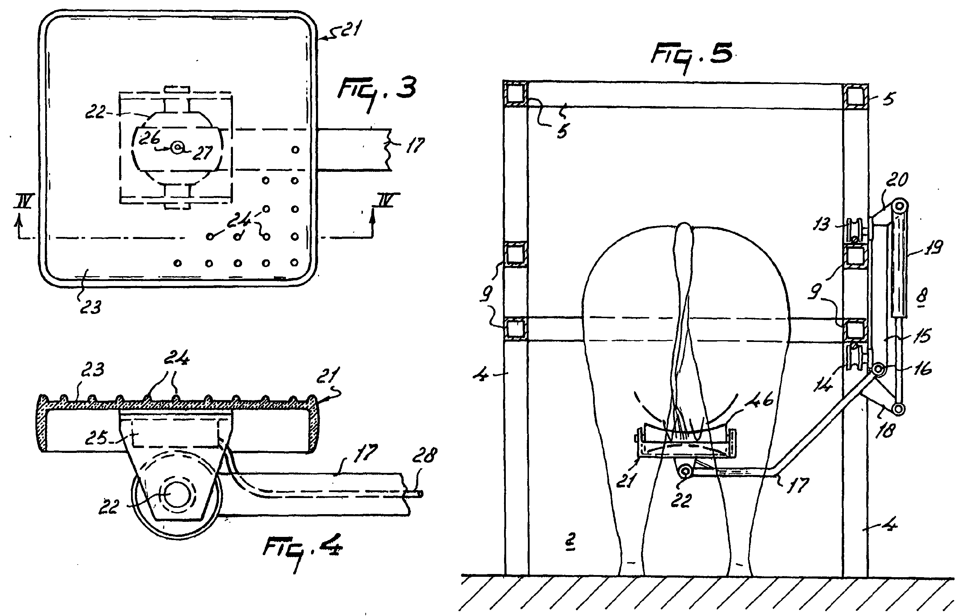

Figure 5 represents a further embodiment of a massage member 8 in accordance with the invention. Elements corresponding with those of the first embodiment are indicated by the same reference numerals. In Figure 5 the massage element 21 of the massage member 8 is designed as a diabolic roller element 46. By means of a (non-shown) motor the diabolic roller element 46 can be driven in two directions. With the aid of the diabolic roller element 46 the rear side of the animal can be massaged. It will also be possible to set the diabolic roller element 46 vibrating. In a (non-shown) embodiment it will be possible as well to move the diabolic roller element 46 vertically along the rear side of the animal.

## Claims

1. A construction including an accommodation for animals, such as cows, said accommodation (1) comprising at least one milk box (2), and a massage member (8) and/or a brushing member (30) disposed on the milk box (2) or near thereto in such a manner that it will be possible to massage or brush the rear end of the animal, said massage member (8) and the brushing member (30) comprising a robot arm construction (12, 23) by means of which it will be possible to massage and/or brush an animal automatically from its head to its rear end by means of a massage element (21) and a brush (44) being disposed near the end of the robot arm construction, whereby the massage element (21) is connected to the robot arm construction (12) via a hinge (22) so as to be capable of adapting itself to the unevennesses of the body of the animal.

2. A construction as claimed in claim 1, **characterized in that** the hinge (22) is a ball-and-socket joint comprising stop means with the aid of which the strike which the massage element (21) is allowed to make relative to the robot arm construction (12) is limited.

3. A construction as claimed in claim 1 or 2, **characterized in that** the massage member (8) comprises a massage element (21) which is made of flexible material, such as synthetic material or rubber.

4. A construction as claimed in any one of the preceding claims, **characterized in that** the massage and/or the brushing member (8, 30) comprise(s) a device (26) by means of which it will be possible, in a cold season, to supply automatically warm air, water or oil during massaging and/or brushing.

5. A construction as claimed in any one of the preceding claims, **characterized in that** the massage element (21) has a profiled surface.

6. A construction as claimed in claim 5, **characterized in that** the profiled surface is constituted by ribs and/or knobs (24).

7. A construction as claimed in any one of the preceding claims, **characterized in that** the robot arm construction (12, 33) is disposed near the side of the milk box (2).

8. A construction as claimed in claim 7, **characterized in that** the robot arm construction (12, 33) is fastened to the frame (3) of the milk box (2).

9. A construction as claimed in any one of the preceding claims, **characterized in that** the construction comprises a longitudinal guide means (7, 31), such as a rail, across which the massage member (8) and/or the brushing member (30) can be moved in the longitudinal direction of the animal.

10. A construction as claimed in any one of the preceding claims, **characterized in that** the massage member (8) is provided with drive means (25) with the aid of which the massage element (21) can be set vibrating.

11. A construction as claimed in any one of the preceding claims, **characterized in that** there is disposed, near the end of the robot arm construction (33), a rotatably driven brush (44).

12. A construction as claimed in claim 10 or 11, **characterized in that** the brush and the massage element (44, 21) are capable of being driven at a variable speed.

13. A construction as claimed in any one of the preceding claims, **characterized in that** on both sides of the milk box (2) there are/is arranged a massage member (8) and/or a brushing member (30).

## Patentansprüche

1. Vorrichtung mit einer Unterkunft für Tiere, wie z. B. Kühe, wobei die Unterkunft (1) mindestens eine Melkbox (2) sowie eine Massagevorrichtung (8) und/oder eine Bürstvorrichtung (30) umfaßt, die auf oder nahe der Melkbox (2) derart angeordnet sind, daß die Möglichkeit besteht, das hintere Ende des Tieres zu massieren oder zu bürsten, wobei die Massagevorrichtung (8) und die Bürstvorrichtung (30) eine Roboterarm-Konstruktion (12, 23) umfassen, mittels der es möglich ist, ein Tier vom Kopf bis zum hinteren Ende automatisch zu massieren und/oder zu bürsten, und zwar mit Hilfe eines Massageelements (21) und einer Bürste (44), die nahe dem Ende der Roboterarm-Konstruktion angeordnet sind, wobei das Massageelement (21) mit der Roboterarm-Konstruktion (12) über ein Gelenk (22) derart verbunden ist, daß es in der Lage ist, sich den Unebenheiten des Körpers des Tieres anzupassen.

2. Vorrichtung nach Anspruch 1,
**dadurch gekennzeichnet, daß** das Gelenk (22) ein Kugelgelenk ist, das eine Anschlagvorrichtung umfaßt, mit deren Hilfe der Ausschlag des Massageelements (21) relativ zu der Roboterarm-Konstruktion (12) begrenzt wird.

3. Vorrichtung nach Anspruch 1 oder 2,
**dadurch gekennzeichnet, daß** die Massagevorrichtung (8) ein Massageelement (21) umfaßt, das aus einem elastischen Material, wie z. B. Kunststoff oder Gummi, hergestellt ist.

4. Vorrichtung nach einem der vorhergehenden Ansprüche,
**dadurch gekennzeichnet, daß** die Massage- und/oder die Bürstvorrichtung (8, 30) eine Vorrichtung (26) umfassen/umfaßt, mittels der es möglich ist, bei kalter Witterung während des Massierens und/oder Bürstens automatisch warme Luft, Wasser oder Öl zuzuführen.

5. Vorrichtung nach einem der vorhergehenden Ansprüche,
**dadurch gekennzeichnet, daß** das Massageelement (21) eine profilierte Oberfläche aufweist.

6. Vorrichtung nach Anspruch 5,
**dadurch gekennzeichnet, daß** die profilierte Oberfläche durch Rippen und/oder Noppen (24) gebildet ist.

7. Vorrichtung nach einem der vorhergehenden Ansprüche,
**dadurch gekennzeichnet, daß** die Roboterarm-Konstruktion (12, 33) nahe der Seite der Melkbox (2) angeordnet ist.

8. Vorrichtung nach Anspruch 7,
**dadurch gekennzeichnet, daß** die Roboterarm-Konstruktion (12, 33) an dem Rahmen (3) der Melkbox (2) befestigt ist.

9. Vorrichtung nach einem der vorhergehenden Ansprüche,
**dadurch gekennzeichnet, daß** die Vorrichtung eine Längsführung (7, 31), wie z. B. eine Schiene, umfaßt, auf der die Massagevorrichtung (8) und/oder die Bürstvorrichtung (30) in Längsrichtung des Tieres bewegt werden kann.

10. Vorrichtung nach einem der vorhergehenden Ansprüche,
**dadurch gekennzeichnet, daß** die Massagevorrichtung (8) mit einer Antriebsvorrichtung (25) versehen ist, mit deren Hilfe das Massageelement (21) in Schwingungen versetzt werden kann.

11. Vorrichtung nach einem der vorhergehenden Ansprüche,
**dadurch gekennzeichnet, daß** nahe dem Ende der Roboterarm-Konstruktion (33) eine drehbar angetriebene Bürste (44) angeordnet ist.

12. Vorrichtung nach Anspruch 10 oder 11,
**dadurch gekennzeichnet, daß** die Bürste und das Massageelement (44, 21) mit veränderlicher Geschwindigkeit angetrieben werden können.

13. Vorrichtung nach einem der vorhergehenden Ansprüche,
**dadurch gekennzeichnet, daß** an beiden Seiten der Melkbox (2) eine Massagevorrichtung (8) und/oder eine Bürstvorrichtung (30) angeordnet sind/ist.

## Revendications

1. Structure comprenant un aménagement pour animaux, tels que des vaches, ledit aménagement (1) comprenant au moins un box de traite (2) et un élément de massage (8) et/ou un élément de brossage (30) disposé sur le box de traite (2) ou à proximité de celle-ci de sorte qu'il est possible de masser ou de brosser l'extrémité arrière de l'animal, ledit élément de massage (8) et l'élément de brossage (30) comprenant une structure de bras robotisé (12, 13) au moyen de laquelle il est possible de masser et/ou de brosser un animal automatiquement depuis sa tête jusqu'à son extrémité arrière au moyen d'un élément de massage (21) et d'une brosse (44) qui est disposée à proximité de l'extrémité de la structure de bras robotisé, moyennant quoi l'élément de massage (21) est raccordé à la structure de bras robotisé (12) via une articulation (22) afin de pouvoir s'adapter elle-même à l'irrégularité du corps de l'animal.

2. Structure selon la revendication 1,
**caractérisée en ce que** l'articulation (22) est une articulation à rotule comprenant des moyens de butée à l'aide desquels la frappe que l'élément de massage (21) est autorisé à réaliser par rapport à la structure de bras robotisé (12) est limitée.

3. Structure selon la revendication 1 ou 2, **caractérisée en ce que** l'élément de massage (8) comprend un élément de massage (21) qui est réalisé avec un matériau flexible, tel qu'un caoutchouc ou matériau synthétique.

4. Structure selon l'une quelconque des revendications précédentes, **caractérisée en ce que** l'élément de massage et/ou de brossage (8, 30) comprend (comprennent) un dispositif (26) au moyen duquel il est possible, pendant la saison froide, d'alimenter automatiquement de l'air chaud, de l'eau ou de l'huile pendant le massage et/ou le brossage.

5. Structure selon l'une quelconque des revendications précédentes, **caractérisée en ce que** l'élément de massage (21) a une surface profilée.

6. Structure selon la revendication 5,
**caractérisée en ce que** la surface profilée est constituée de nervures et/ou de boutons (24).

7. Structure selon l'une quelconque des revendications précédentes, **caractérisée en ce que** la structure de bras robotisé (12, 33) est disposée près du côté du box de traite (2).

8. Structure selon la revendication 7,
**caractérisée en ce que** la structure de bras robotisé (12, 33) est fixée sur le châssis (3) du box de traite (2).

9. Structure selon l'une quelconque des revendications précédentes, **caractérisée en ce que** la construction comprend des moyens de guidage longitudinaux (7, 31), tels qu'un rail sur lequel l'élément de massage (8) et/ou l'élément de brossage (30) peuvent être déplacés dans la direction longitudinale de l'animal.

10. Structure selon l'une quelconque des revendications précédentes, **caractérisée en ce que** l'élément de massage (8) est doté de moyens d'entraînement (25) à l'aide desquels l'élément de massage (21) peut être réglé sur une position vibrante.

11. Structure selon l'une quelconque des revendications précédentes, **caractérisée en ce que** l'on dispose, près de l'extrémité de la structure de bras robotisé (33), une brosse (44) entraînée de manière rotative.

12. Structure selon la revendication 10 ou 11, **caractérisée en ce que** la brosse et l'élément de massage (44, 21) sont capables d'être entraînés à une vitesse variable.

13. Structure selon l'une quelconque des revendications précédentes, **caractérisée en ce que** des deux côtés du box de traite (2), on trouve un élément de massage (8) et/ou un élément de brossage (30).
